# EUROPEAN PATENT APPLICATION

(11) **EP 2 846 331 A1**
(43) Date of publication of application: **11.03.2015**
(21) Application number: 14153721.7
(22) Date of filing: 03.02.2014
(51) Int. Cl.: G11B 27/34

(54) **Electronic apparatus, control method, and computer-readable storage medium**

(30) Priority: 06.09.2013 JP 2013185119
(71) Applicant: Kabushiki Kaisha Toshiba, Tokyo 105-8001 (JP)
(72) Inventor: Yamashita, Michio, Tokyo, 105-8001 (JP); Ito, Hiroaki, Tokyo, 105-8001 (JP); Nakagawa, Tomoki, Tokyo, 105-8001 (JP); Tanaka, Masami, Tokyo, 105-8001 (JP)
(74) Representative: Henkel, Breuer & Partner

(57) **Abstract**

According to one embodiment, an electronic apparatus includes a processor (105, 106) and a display controller (107). The processor (105) is configured to acquire a processor attribute and a processor keyword of content, and to extract a scene including the first keyword in a caption from contents having the first attribute. The display controller (107) is configured to cause a scene image (400) representing an extracted scene to be displayed on a display (14).

## Description

Embodiments described herein relate generally to an electronic apparatus, a control method, and a computer-readable storage medium.

There are electronic apparatuses such as a video information storage device having a function of automatically recording all programs carried on a channel and in a time slot designated by the user.

However, since a large number of programs are recorded by the above function, it is difficult for the user to search for a desired program or a scene included in a program.

There has been a need for enabling a user to search for a recorded program or a scene included in the program.

A general architecture that implements the various features of the embodiments will now be described with reference to the drawings. The drawings and the associated descriptions are provided to illustrate the embodiments and not to limit the scope of the invention.
FIG. 1 is a block diagram showing a schematic structure of an video information recorder according to an embodiment;
FIG. 2 is a block diagram showing a function of the video information recorder according to the embodiment;
FIG. 3 is a flowchart for describing an automatic recording function according to the embodiment;
FIG. 4 is a flowchart for describing a scene search function according to the embodiment;
FIG. 5 is an illustration showing an example of a search condition screen according to the embodiment;
FIG. 6 is an illustration showing an example of a scene list according to the embodiment;
FIG. 7 is an illustration showing another example of the scene list according to the embodiment;
FIG. 8 is a flowchart for describing the scene search function according to the embodiment;
FIG. 9 is an illustration showing an example of a keyword list according to the embodiment;
FIG. 10 is an illustration for describing a database query according to the embodiment;
FIG. 11 is an illustration showing an example of electronic program information according to the embodiment; and
FIG. 12 is an illustration showing a series of captioned scene data included in a recorded program according to the embodiment.

Various embodiments will be described hereinafter with reference to the accompanying drawings.

In general, according to one embodiment, an electronic apparatus includes a processor and a display controller. The processor is configured to acquire a first attribute and a first keyword of content, and to extract a scene including the first keyword in a caption from contents having the first attribute. The display controller is configured to cause a scene image representing an extracted scene to be displayed on a display.

In the present embodiment, as an example of an electronic apparatus, video information recorder capable of recording and reproducing a broadcast program is disclosed.

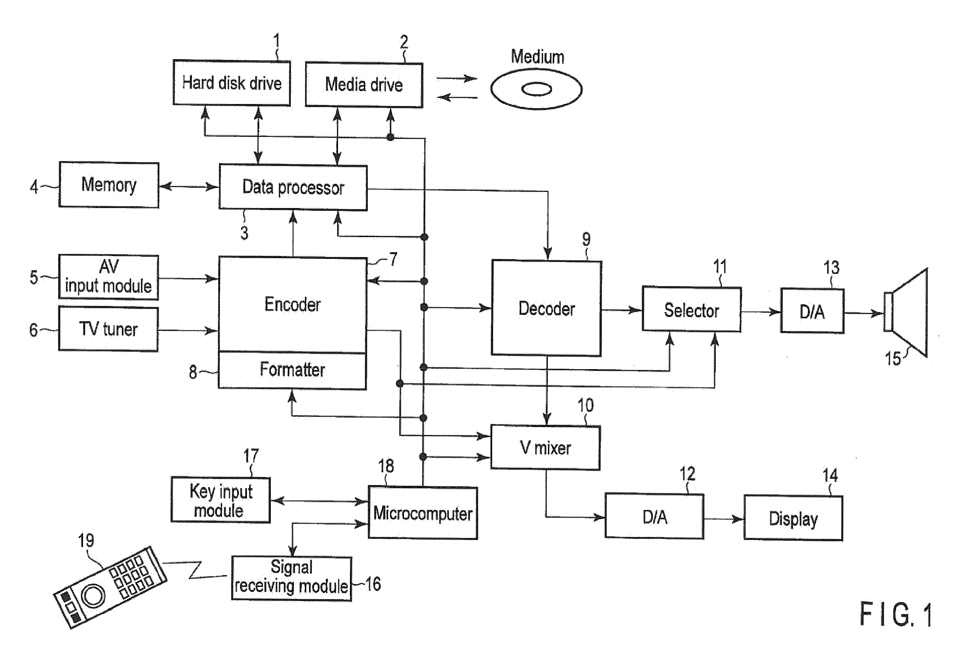

FIG. 1 is a block diagram showing a schematic structure of the video information recorder. The video information recorder includes, as a storage device capable of writing and reading content, such as a program, a hard disk drive 1 and a media drive 2. The video information recorder may include only one of the hard disk drive 1 and the media drive 2, or include a storage medium or the like including a semiconductor memory in addition to or instead of the above two elements. The media drive 2 reads information on an optical disk medium conforming to the DVD standard or the Blu-ray (registered trademark) standard, for example, and writes information to such an optical disk medium.

The video information recorder includes a data processor 3 as an element for controlling the reading and writing of data using the hard disk drive 1 and the media drive 2. To the data processor 3, a nonvolatile memory 4 storing a computer program or the like is connected. The data processor 3 executes various kinds of processing in accordance with a computer program stored by the memory 4. The data processor 3 may use the memory 4 as a work area necessary for executing the computer program.

As elements for mainly recording an image, the video information recorder includes an AV input module 5, a TV tuner 6, an encoder 7, and a formatter 8.

The AV input module 5 supplies a digital video signal and a digital audio signal input from an externally connected device, for example, to the encoder 7. The TV tuner 6 tunes a digital broadcast signal stream supplied from an externally connected antenna (i.e., performs channel selection). The TV tuner 6 supplies the tuned digital broadcast signal stream to the encoder 7. The digital broadcast signal stream includes a video signal, an audio signal, a caption signal, an electronic program guide (EPG) signal, etc. The caption signal is a signal corresponding to the so-called closed caption, namely, a caption whose display on an image can be switched between on and off. The EPG signal represents electronic program information. The electronic program information includes data indicating a program ID specific to each program, the title of the program, the broadcast date and time of the program, the broadcasting station of the program, an outline of the program, the genre of the program, a performer or the cast of the program, a program code, etc. The genre of a program includes, for example, news, drama, variety, and documentary. The program code represents, for example, a new program, a final episode, a live broadcast, a rebroadcast, or a captioned broadcast.

In the present embodiment, a case where a signal input from the AV input module 5 and the TV tuner 6 is digital is illustrated. However, it should be noted that each signal may be analog. If each signal is analog, an A/D converter for converting such an analog signal into a digital signal may be provided in the encoder 7 or the like.

The encoder 7 converts a video signal input from the AV input module 5 and the TV tuner 6, for example, into a digital video signal which is compressed in accordance with the standard of moving picture experts group (MPEG)-1, MPEG-2, or the like, and supplies the converted digital video signal to the formatter 8. Further, the encoder 7 converts the audio signal input from the AV input module 5 and the TV tuner 6, for example, into a digital audio signal which is compressed in accordance with the standard of MPEG or audio compression (AC)-3, or the like, and supplies the converted digital audio signal to the formatter 8. Furthermore, the encoder 7 converts the caption signal and the EPG signal included in the digital broadcast signal stream input from the TV tuner 6 into a digital signal compressed in accordance with a predetermined standard, and supplies the converted digital signal to the formatter 8. When the compressed digital video and audio signals are input, the encoder 7 may supply these video and audio signals to the formatter 8 directly. In addition, the encoder 7 can directly supply the digital video signal and the digital audio signal to a video (V) mixer 10 and a selector 11 to be described later, respectively.

The formatter 8 generates packetized elementary streams (PESs) for the digital video signal, audio signal, caption signal, EPG signal, etc., supplied from the encoder 7. Further, the formatter 8 gathers the generated PESs of the video signal, the audio signal, and the like, and converts the gathered data into a format of a predetermined video-recording (VR) specification. The formatter 8 supplies data generated by this conversion to the data processor 3. The data processor 3 can supply the data supplied from the formatter 8 to the hard disk drive 1 or the media drive 2 and store this data in a hard disk drive or an optical disk medium.

As elements for mainly reproducing an image, the video information recorder includes a decoder 9, the V mixer 10, the selector 11, and D/A converters 12 and 13.

The data processor 3 supplies data stored in the hard disk drive 1 or data which can be read from the optical disk medium by the media drive 2, for example, to the decoder 9.

The decoder 9 retrieves the PES regarding each of the image, the sound, and the caption from the data supplied from the data processor 3, and decodes each PES which has been retrieved into a video signal, an audio signal, and a caption signal. The decoder 9 outputs the decoded video signal and caption signal to the V mixer 10, and outputs the decoded audio signal to the selector 11.

The V mixer 10 prepares a signal by combining a text signal, such as the caption signal, with the video signal supplied from the decoder 9, etc. The V mixer 10 may prepare a signal by combining a video signal of a screen by on-screen display (OSD) control with the video signal supplied from the decoder 9, etc. The V mixer 10 outputs the combined video signal to the D/A converter 12.

The D/A converter 12 converts the digital video signal input from the V mixer 10 into an analog video signal, and outputs the analog video signal to a display 14 of a television apparatus or the like. The display 14 displays an image based on the input video signal.

The selector 11 selects a signal which should be output as a sound from the audio signal input from the decoder 9 or the audio signal which is directly input from the encoder 7. The selector 11 outputs the selected signal to the D/A converter 13.

The D/A converter 13 converts the digital audio signal input from the selector 11 into an analog audio signal, and outputs the analog audio signal to a speaker 15. The speaker 15 outputs a sound corresponding to the input audio signal.

The video information recorder includes a signal receiving module 16, a key input module 17, and a microcomputer 18, as elements for inputting an instruction from a user, and also controlling each part in accordance with the input instruction.

The key input module 17 includes keys for inputting various instructions concerning recording, reproduction, and the like of a program. The key input module 17 outputs a signal corresponding to an operated key to the microcomputer 18.

The signal receiving module 16 receives a signal wirelessly transmitted from a remote controller 19. The remote controller 19 includes various buttons concerning recording, reproduction, and the like of a program, and wirelessly transmits a signal corresponding to a button operated by the user. The signal receiving module 16 outputs a signal received from the remote controller 19 to the microcomputer 18.

The microcomputer 18 includes a read-only memory (ROM) in which a computer program, etc., is written, a micro-processing unit (MPU) or a central processing unit (CPU) which executes the computer program written in the ROM, and a random-access memory (RAM) which provides a work area necessary for executing the computer program. The microcomputer 18 controls the hard disk drive 1, the media drive 2, the data processor 3, the encoder 7, the formatter 8, the decoder 9, the V mixer 10, the selector 11, etc., in accordance with a signal input through the key input module 17 or a signal received by the signal receiving module 16.

The video information recorder of the present embodiment includes an automatic recording function which automatically records all programs to be broadcast on a channel or in a time slot specified by the user. Further, the video information recorder has a scene search function of searching for a scene including a keyword specified by the user in a caption from a recorded program.

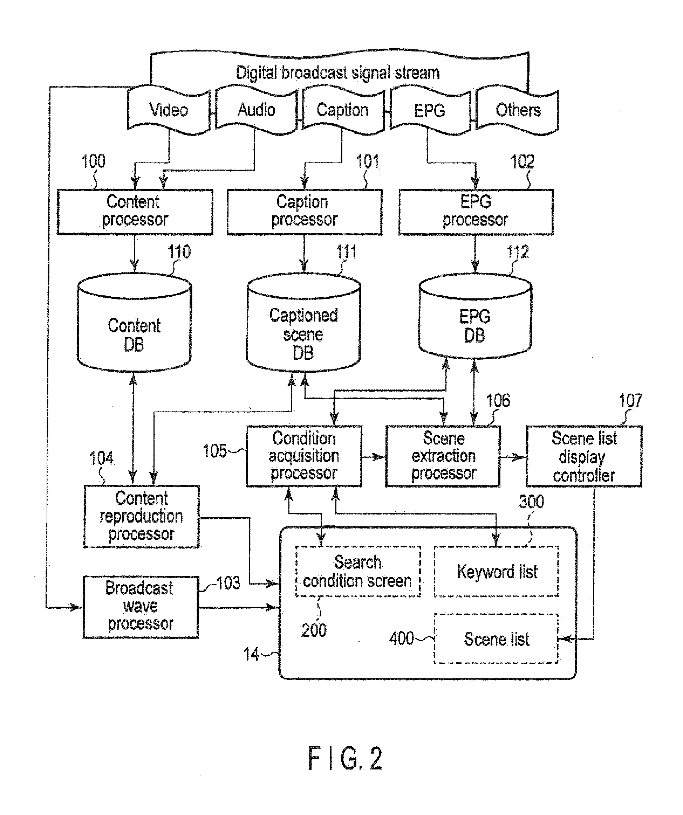

FIG. 2 is a block diagram showing a structure concerning these functions. The video information recorder includes a content processor 100, a caption processor 101, an EPG processor 102, a broadcast wave processor 103, a content reproduction processor 104, a condition acquisition processor 105, a scene extraction processor 106, a scene list display controller 107, a content database (DB) 110, a captioned scene DB 111, and an EPG DB 112.

Each of the processor and controller modules 100 to 107 is realized when a control element, such as the data processor 3 or the microcomputer 18, for example, executes the computer program, and cooperates with each of the hardware modules, etc., shown in FIG. 1. Each of DBs 110 to 112 is stored by the hard disk drive 1, for example. Each of DBs 110 to 112 can be stored in an optical disk medium on which the media drive 2 can write data and from which the media drive 2 can read data. Each of the processor and controller modules 100 to 107 may be constituted by an exclusive processor or hardware module.

The content processor 100 stores data corresponding to a video signal and an audio signal included in a digital broadcast signal stream on a channel specified by a user in advance in a time slot which has been specified by the user, for example, in the content DB 110. The data which is stored in the content DB 110 is hereinafter referred to as content data. In storing the content data in the content DB 110, the content processor 100 adds a program ID of a program relating to the content data to the content data.

The caption processor 101 stores data corresponding to a caption signal included in the digital broadcast signal stream of the channel specified by the user in advance in the time slot which has been specified by the user, for example, in the captioned scene DB 111. The data which is stored in the captioned scene DB 111 is hereinafter referred to as captioned scene data. The captioned scene data includes, for example, a program ID of a program for which a caption is to be displayed, character string information representing a character string of the caption, and display time information representing a display time of the caption. The display time information includes a display start time and a display end time of the caption. The display start time and the display end time can be given in Universal Coordinated Time (UTC) or Japan Standard Time (JST), for example, or by using a reproduction elapsed time from the beginning of the program.

The EPG processor 102 stores data corresponding to an EPG signal included in the digital broadcast signal stream on the channel specified by the user in advance in the time slot which has been specified by the user, for example, in the EPG DB 112. The data which is stored in the EPG DB 112 is hereinafter referred to as EPG data. The EPG data represents the aforementioned electronic program information. The electronic program information includes a program ID as stated above. That is, the content data stored in the content DB 110, the captioned scene data stored in the captioned scene DB 111, and the EPG data stored in the EPG DB 112 are associated with each other by the program ID.

The broadcast wave processor 103 retrieves a video signal and an audio signal from the digital broadcast signal stream corresponding to a channel selected by the user by the operation of the remote controller 19, or the like. The broadcast wave processor 103 causes the image corresponding to the retrieved video signal to be displayed on the display 14, and the sound corresponding to the retrieved audio signal to be output from the speaker 15. When the user operates, for example, the remote controller 19 so that the caption is displayed (i.e., caption display "on"), the broadcast wave processor 103 causes the caption corresponding to the caption signal included in the digital broadcast signal stream to be displayed on the display 14.

The content reproduction processor 104 reproduces a recorded program. That is, the content reproduction processor 104 causes the image corresponding to the video signal included in the content data stored in the content DB 110 to be displayed on the display 14, and the sound corresponding to the audio signal included in the content data to be output from the speaker 15. The content reproduction processor 104 may display a caption represented by the captioned scene data stored in the captioned scene DB 111 on the display 14 in synchronization with the reproduction of the content data stored in the content DB 110.

The condition acquisition processor 105 acquires search conditions for searching for a scene from a program whose content data is stored in the content DB 110 (hereinafter referred to as a "recorded program"). The search conditions include keywords and attributes of the program. Here, the "attributes of a program" refers to information, such as a genre of a program, a program code, and a broadcasting station or a channel of the program, indicated by the electronic program information.

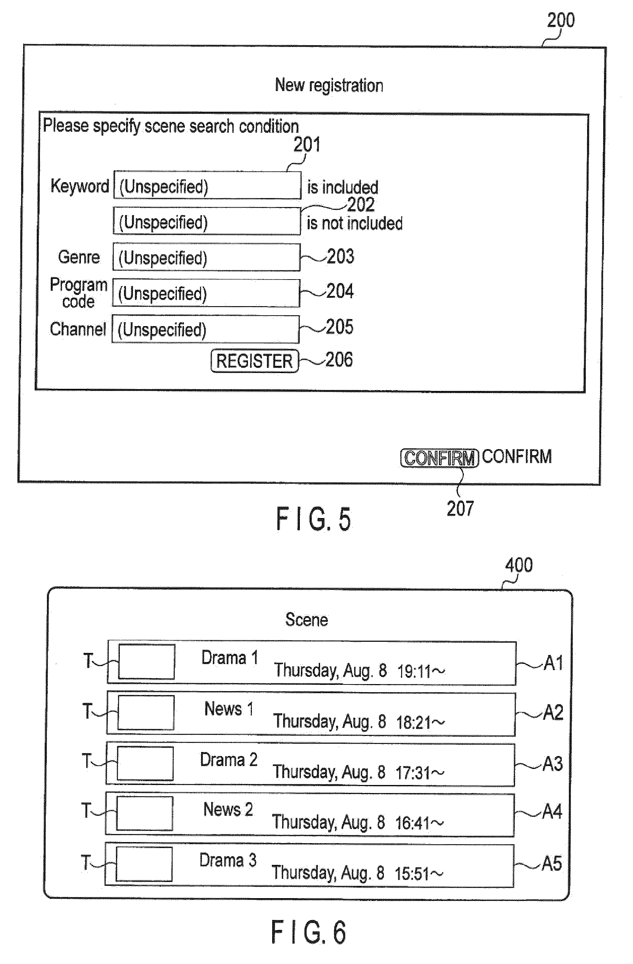

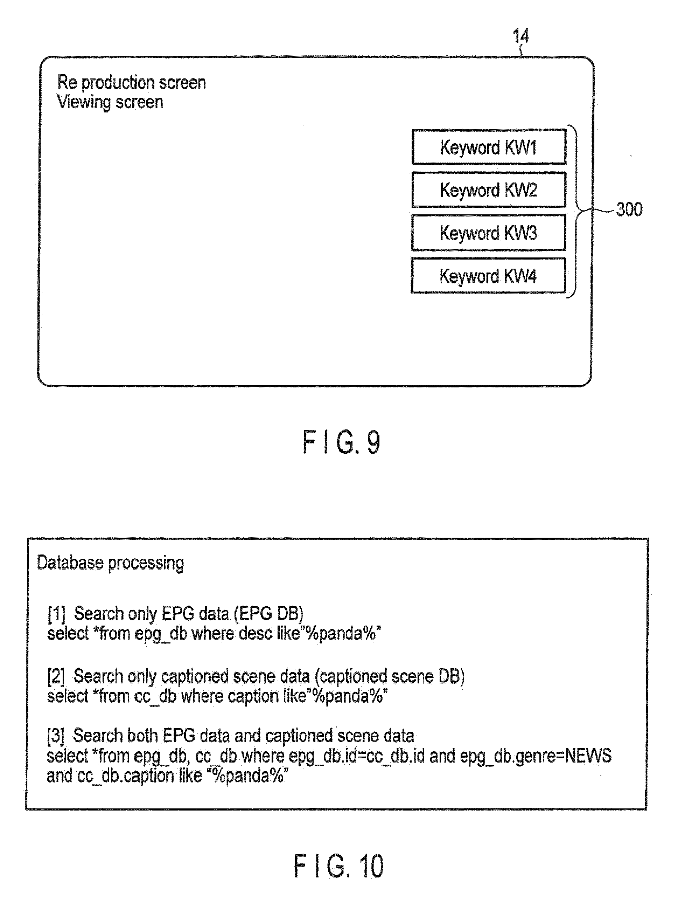

In the present embodiment, the condition acquisition processor 105 can acquire the search conditions in two ways. The first way is to display a search condition screen 200 (FIG. 5) for allowing keywords and attributes, which are the search conditions, to be input on the display 14, and obtain the keywords and the attributes that are input on this screen as the search conditions. The second way is to display a keyword list 300 (FIG. 9) in which candidates for the keywords which may be used as the search conditions is displayed on the display 14, and obtain a keyword selected from this list as the search condition and also obtain the attributes shown by the electronic program information on the program being watched by the user as other search conditions. Here, the "program being watched" includes not only a program of images being displayed by the broadcast wave processor 103 on the display 14 in accordance with a real-time broadcast wave stream, but also a recoded program of images being displayed by the content reproduction processor 104 on the display 14.

The scene extraction processor 106 extracts a scene that matches the search condition acquired by the condition acquisition processor 105 from the recorded program. In the present embodiment, the scene extraction processor 106 first extracts a program having the attribute, which is the search condition, from a group of recorded programs, and then extracts a scene including the keyword, which is the search condition, in the caption from the extracted program.

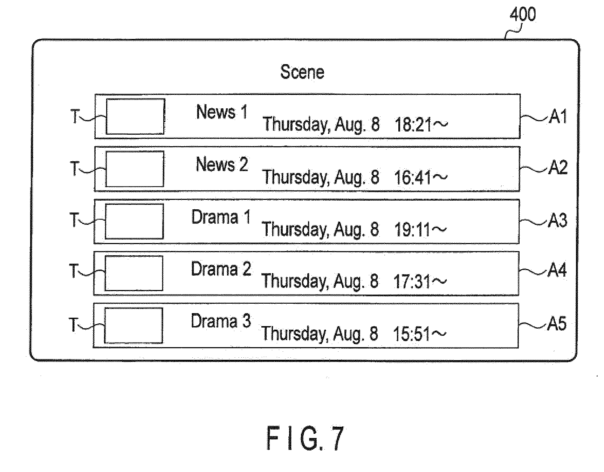

The scene list display controller 107 causes a scene image representing the scene extracted by the scene extraction processor 106 to be displayed on the display 14. The scene image of the present embodiment is a scene list 400 in which information items concerning scenes are arranged in accordance with a predetermined condition, for example (see FIGS. 6 and 7).

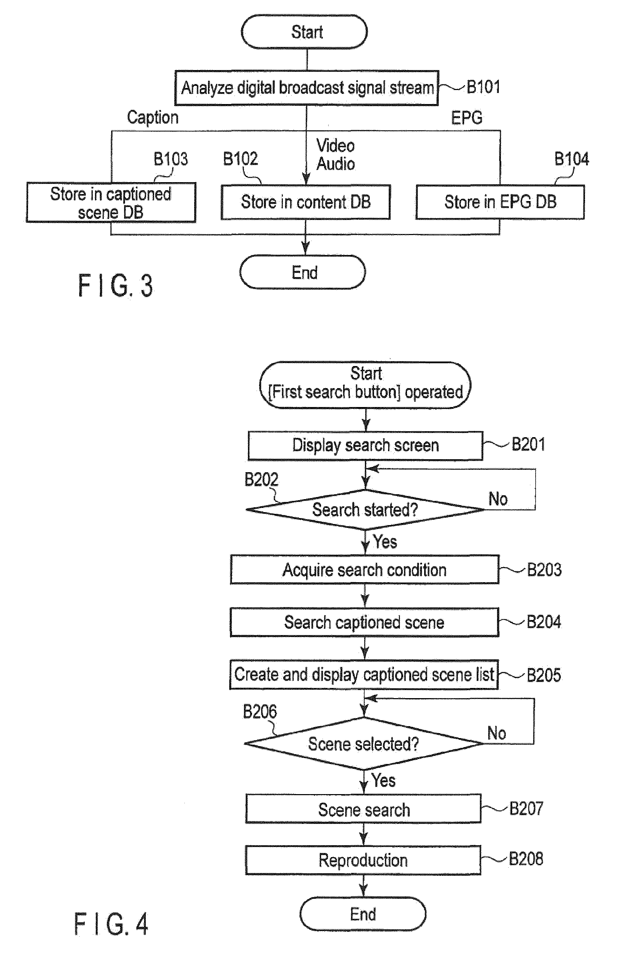

Details of the operation of each of the processor and controller modules 100 to 107 shown in FIG. 2 will be described. Firstly, processing of storing content data by the video information recorder by the aforementioned automatic recording function will be described. When the automatic recording function is activated, the content processor 100, the caption processor 101, and the EPG processor 102 cooperate with each other and execute the processing shown in the flowchart of FIG. 3.

Firstly, the content processor 100, the caption processor 101, and the EPG processor 102 analyze data corresponding to the digital broadcast signal stream, for example, a group of data items including the PESs generated by the formatter 8, and extract the PES regarding the video signal and the audio signal, the PES regarding the caption signal, and the PES regarding the EPG signal, respectively (block B101).

Next, the content processor 100, the caption processor 101, and the EPG processor 102 execute the processing for storing the data corresponding to the PESs extracted in block B101.

That is, the content processor 100 stores the content data obtained by decoding the PES regarding the video signal and the audio signal extracted in block B101 in the content DB 110 (block B102).

The caption processor 101 stores the captioned scene data obtained by decoding the PES regarding the caption signal extracted in block B101 in the captioned scene DB 111 (block B103).

The EPG processor 102 stores the EPG data obtained by decoding the PES regarding the EPG signal extracted in block B101 in the EPG DB 112 (block B104).

The content processor 100, the caption processor 101, and the EPG processor 102 repeat the processing shown in the flowchart of FIG. 3 for the digital broadcast signal streams on a channel specified by the user in a time slot specified by the user. In this way, in the time slot specified by the user, the content data of all of the programs broadcast on the channel specified by the user is stored in the content DB 110. In addition, the captioned scene data corresponding to each scene included in the recorded programs whose content data is stored in the content DB 110 is stored in the captioned scene DB 111. Further, the EPG data representing the electronic program information on the recorded programs whose content data is stored in the content DB 110 is stored in the EPG DB 112.

Next, referring to FIGS. 4 to 9, processing of searching for scenes that suit a user's preference from the group of recorded programs by the aforementioned scene search function, and reproducing a scene selected by the user of the scenes that have been found will be described.

First of all, the processing of acquiring search conditions by the first way as described above, and searching for scenes will be described.

When a user presses a first search button provided on the remote controller 19 while a certain program is being displayed on the display 14, and a signal corresponding to that button is received by the signal receiving portion 16, the content reproduction processor 104, the condition acquisition processor 105, the scene extraction processor 106, and the scene list display controller 107 cooperate with each other and execute the processing shown in the flowchart of FIG. 4.

Firstly, the condition acquisition processor 105 causes the search condition screen 200 to be displayed on the display 14 (block B201). FIG. 5 shows an example of the search condition screen 200 displayed on the display 14. The search condition screen 200 includes five input areas 201 to 205, a Register button 206, and a Confirm button 207.

The input areas 201 and 202 are areas for inputting the keywords. In the descriptions given below, a keyword input in the input area 201 is referred to as a first keyword, and a keyword input in the input area 202 is referred to as a second keyword.

The input areas 203 to 205 are areas for inputting attributes of the program. More specifically, the input area 203 is an area for inputting the genre of a program, the input area 204 is an area for inputting a program code, and the input area 205 is an area for inputting the channel of the program.

As regards the inputs to the input areas 201 to 205, a user selects, for example, by operating the remote controller 19 or the key input module 17, areas to be input from among the input areas 201 to 205. Next, the user inputs characters, numbers, symbols or the like, which represent the keywords or attributes in the above selected areas by operating the remote controller 19 or the key input module 17, for example. Character strings, etc., which can be candidates for input in the above selected areas may be displayed as a list, and the character strings, etc., which are selected from this list may be input in the above selected areas. A plurality of keywords or attributes can be input in a single input area. Further, a keyword or an attribute does not necessarily have to be input in all of the input areas 201 to 205, and some of the input areas may be blank (left unspecified).

The Register button 206 is a button for setting the keywords input in the input areas 201 and 202, and the attributes input in the input areas 203 to 205 as default search conditions in the future. That is, if the search conditions are set by the operation of the Register button 206, in the input areas 201 to 205 of the search condition screen 200 to be displayed by the operation of the first search button thereafter, the search conditions which have been set are input as the defaults.

The Confirm button 207 is a button for closing the search condition screen 200 and starting the search. The user can operate the Register button 206 and the Confirm button 207 through the remote controller 19 or the key input module 17, for example.

While the search condition screen 200 is being displayed, the condition acquisition processor 105 waits for an instruction for starting the search (block B202). When the user instructed the search to be initiated by operating the Confirm button 207 ("Yes" in block B202), the condition acquisition processor 105 acquires the first keyword and the second keyword, which are the search conditions, from the input area 201 and the input area 202 of the search condition screen 200, respectively, and acquires the attributes, which are the search conditions, from the input areas 203 to 205 (block B203). The condition acquisition processor 105 notifies the first keyword and the second keyword acquired from the input areas 201 and 202 to the scene extraction processor 106 as the conditions of search using captions. Further, the condition acquisition processor 105 notifies the attributes acquired from the input areas 203 to 205 to the scene extraction processor 106 as the conditions of search using the electronic program information.

Upon receiving the notification of the search conditions, the scene extraction processor 106 searches recorded programs for scenes (block B204).

In block B204, the scene extraction processor 106 first extracts a program having the attribute, which is the search condition, from a group of recorded programs. More specifically, the scene extraction processor 106 accesses the EPG DB 112 and extracts a program ID from the EPG data showing that the attribute of the program matches the attribute of the search condition. If there exist a plurality of EPG data items showing that the attribute of the program match the attribute of the search condition, the scene extraction processor 106 extracts the program IDs from all of those EPG data items.

Next, the scene extraction processor 106 accesses the captioned scene DB 111, and extracts the captioned scene data that includes the first keyword, which is the search condition, but does not include the second keyword, which is also the search condition, from the captioned scene data including the extracted program ID as described above.

After the processing of block B204, the scene list display controller 107 generates image data of the scene list 400, and causes the scene list 400 based on the image data to be displayed on the display 14 (block B205).

FIG. 6 shows an example of the scene list 400. The scene list 400 includes scene area A corresponding to the captioned scene data extracted by the scene extraction processor 106 in block B204. FIG. 6 illustrates five scene areas A1 to A5. Scene area A includes a title (for example, "drama 1") of the recorded program corresponding to the program ID included in the captioned scene data, and the broadcast starting date and time of the program (for example, "Thursday, Aug. 8, from 19:11"). In generating the image data of the scene list 400, the scene list display controller 107 obtains the title and broadcast starting date and time by searching the EPG DB 112 with the program ID, for example, used as the key.

In addition, scene area A includes thumbnail T of the scene. Thumbnail T represents an image of the recorded program in the display time information included in the captioned scene data. In generating the image data of the scene list 400, the scene list display controller 107 searches the content data of the content DB 110 with the program ID, for example, used as the key, and generates thumbnail T by reducing the image corresponding to the display start time of the display time information in the found content data.

The scene list 400 can be constituted by a plurality of pages including mutually different scene areas. In this case, in accordance with an instruction given for page switching by the operation of the remote controller 19, for example, the scene list display controller 107 switches scene area A arranged in the scene list 400 to the scene area A of the next page or the previous page.

FIG. 6 illustrates a case where scene areas are arranged in the order of broadcasting dates and times of the scenes that are close to the current date and time. The genres of the search condition of the scene list 400 shown in FIG. 6 are "news" and "drama", for example. Therefore, in the scene list 400, scene areas A2 and A4 showing the scenes of the recorded programs whose genre is news (news 1, 2), and scene areas A1, A3, and A5 showing the scenes of the recorded programs whose genre is drama (dramas 1, 2, 3) are mixed.

The order in which scene areas are arranged is not limited to broadcasting date and time. FIG. 7 shows another example of the scene list 400. The scene list 400 shown in FIG. 7 is an example in which the scene areas are arranged by the genre, such as "news" or "drama", which is the search condition.

The user can select a desired scene area from the scene list 400 by operating the remote controller 19, for example.

While the scene list 400 is being displayed on the display 14, the scene list display controller 107 waits for the selection of the scene area A from the scene list 400 (block B206). If any one of the scene areas is selected ("Yes" in block B206), the scene list display controller 107 notifies the program ID of the recorded program corresponding to the selected scene area A and the time information of that scene to the content reproduction processor 104. Here, the time information is a reproduction elapsed time from the beginning of the recorded program, and can be treated as a display start time of the display time information included in the captioned scene data corresponding to the selected scene area A, for example.

Upon receiving the notification of the program ID and the time information, the content reproduction processor 104 searches for a reproduction start position of the recorded program (block B207). The reproduction start position is the scene indicated by the time information in the content data corresponding to the program ID stored in the content DB 110, for example.

After the processing of block B207, the content reproduction processor 104 starts reproduction of the recorded program (block B208). That is, the content reproduction processor 104 accesses the content DB 110 and sequentially reads the content data from the reproduction start position, and causes the image corresponding to the video signal included in the read content data to be displayed on the display 14. Further, the content reproduction processor 104 causes the sound corresponding to the audio signal included in the read content data to be output from the speaker 15.

At the processing of block B208, the processing shown in the flowchart of FIG. 4 is terminated.

Next, the processing of acquiring search conditions by the second way as described above, and searching for scenes will be described.

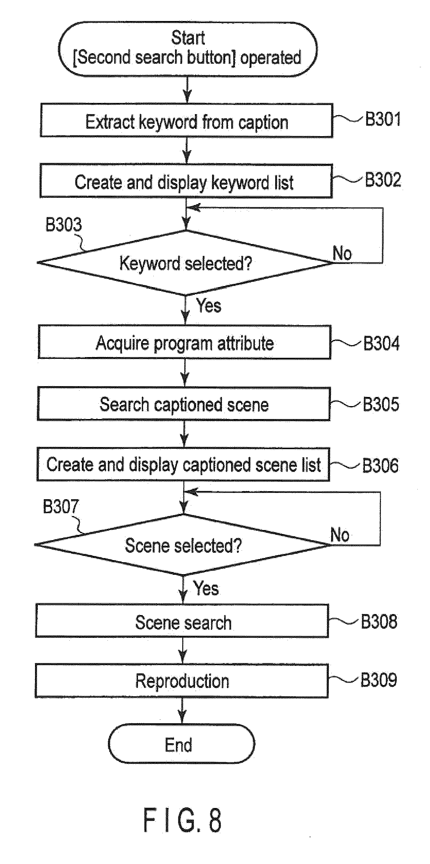

When a user presses a second search button provided on the remote controller 19 while a certain program is being displayed on the display 14, and the signal receiving module 16 receives a signal corresponding to that button, the content reproduction processor 104, the condition acquisition processor 105, the scene extraction processor 106, and the scene list display controller 107 cooperate with each other and execute the processing shown in the flowchart of FIG. 8.

First of all, the condition acquisition processor 105 accesses the captioned scene DB 111, and extracts a keyword from the captioned scene data including the program ID of the program being watched (block B301). The keyword can be extracted by subjecting caption character strings included in the caption scene data to morphological analysis, for example. The keyword may be a noun (a common noun or a proper noun, or both), for example. Note that in block B301, when a broadcast of a program being watched is already finished and caption scene data of all of the scenes of the program is stored in the captioned scene DB 111, the caption character strings in all of the scenes of the program are the subject of extraction of the keyword. On the other hand, if a program being watched is on the air, the caption character strings from the beginning of the program to the scene for which storing of the captioned scene data has been completed are the subject of extraction of the keyword. The keyword can be extracted from a character string other than the captions, for example, the title, an outline of the program, a performer or a cast of the program, or the like included in the electronic program information on the program being watched.

After the processing of block B301, the condition acquisition processor 105 generates image data of the keyword list 300, and causes the keyword list 300 based on the image data to be displayed on the display 14 (block B302).

FIG. 9 shows an example of the keyword list 300. The keyword list 300 is an image of the keywords extracted in block B301 which are arranged vertically in a line, for example, as keywords KW1 to KW4 as shown. Duplicated keywords may be unified into a single keyword. The keyword list 300 is displayed on the image being viewed by the OSD control, for example.

In the keyword list 300, the keywords are arranged in accordance with a predetermined rule. As this rule, the order of display time of caption character strings, which constitute the source of extraction of the keywords, the number of times or frequency of occurrence of the keywords in a program, and the number of times or frequency of selection of each of the keywords from the keyword list 300 in the past by the user, for example, can be adopted. The user can select a desired keyword from the keyword list 300 by operating the remote controller 19, for example.

While the keyword list 300 is being displayed on the display 14, the condition acquisition processor 105 waits for selection of the keyword from the keyword list 300 (block B303). When a keyword is selected from the keyword list 300 ("Yes" in block B303), the condition acquisition processor 105 acquires attributes which serve as the search conditions from the electronic program information on the program being watched (block B304). More specifically, the condition acquisition processor 105 accesses the EPG DB 112 and refers to the EPG data including the program ID of the program being watched, and acquires the genre of the program, the program code of the program, and the channel of the program. The condition acquisition processor 105 notifies the keyword selected from the keyword list 300 to the scene extraction processor 106 as the condition of search using captions. In addition, the condition acquisition processor 105 notifies the attributes acquired in block B304 to the scene extraction processor 106 as the conditions of search using the electronic program information.

Upon receiving the notification of the search conditions, the scene extraction processor 106 searches captioned scenes of the recorded program (block B305).

In block B305, firstly, the scene extraction processor 106 extracts a program having the attributes of the search conditions from a group of recorded programs. More specifically, the scene extraction processor 106 accesses the EPG DB 112 and extracts the program ID from EPG data showing that the attributes of the program match the attributes of the search conditions. If there exist a plurality of EPG data items showing that the attributes of the programs match the attributes of the search conditions, the scene extraction processor 106 extracts the program IDs from all of those EPG data items.

Next, the scene extraction processor 106 accesses the captioned scene DB 111, and extracts captioned scene data including the keyword, which is the search condition, in the caption character strings from the captioned scene data including the program ID extracted as described above.

After the processing of block B305, the scene list display controller 107 generates image data of the scene list 400, and causes the scene list 400 based on the image data to be displayed on the display 14 (block B306). The scene list 400 displayed here is the same as the ones shown in FIGS. 6 and 7, and includes scene area A corresponding to captioned scene data extracted by the scene extraction processor 106 in block B305.

While the scene list 400 is being displayed on the display 14, the scene list display controller 107 waits for selection of the scene area from the scene list 400 (block B307). If any one of the scene areas is selected ("Yes" in block B307), the scene list display controller 107 notifies the program ID of the recorded program corresponding to the selected scene area A and the time information of that scene to the content reproduction processor 104. The time information here is a reproduction elapsed time from the beginning of the recorded program, and can be treated as a display start time of the display time information included in the captioned scene data corresponding to the selected scene area, for example.

Upon receiving the notification of the program ID and the time information, the content reproduction processor 104 searches for a reproduction start position of the recorded program (block B308). The reproduction start position is the scene indicated by the time information in the content data corresponding to the program ID stored in the content DB 110, for example.

After the processing of block B308, the content reproduction processor 104 starts reproduction of the recorded program (block B309). That is, the content reproduction processor 104 accesses the content DB 110 and sequentially reads the content data from the reproduction start position, and causes the image corresponding to the video signal included in the read content data to be displayed on the display 14. Further, the content reproduction processor 104 causes the sound corresponding to the audio signal included in the read content data to be output from the speaker 15.

At the processing of block B309, the processing shown in the flowchart of FIG. 8 is terminated.

A function of the present embodiment will be described with reference to FIGS. 10 to 12.

FIG. 10 shows a database query in three patterns regarding a search using the captioned scene data stored in the captioned scene DB 111 and the EPG data stored in the EPG DB 112.

Patten [1] is the query for searching for a recorded program corresponding to the EPG data that includes the keyword "panda" in the title or the character string of an outline or the like of the program.

Patten [2] is the query for searching for a scene that includes the keyword "panda" in the caption character strings represented by the captioned scene data. The search by the query of pattern [2] corresponds to the case where "panda" is input as the first keyword, but no second keyword or attributes is input on the search condition screen 200 in the search processing of the flow described with reference to FIG. 4, for example.

Pattern [3] is the query for searching for a scene of a program whose genre represented by the EPG data is "news", and which includes the keyword "panda" in the caption character string represented by the caption scene data. The query of pattern [3] corresponds to the case where "panda" is input as the first keyword, the second keyword is not input, and "news" is input as the genre on the search condition screen 200 in the search processing of the flow described with reference to FIG. 4, for example. Further, the query of pattern [3] corresponds to the case where the keyword "panda" is selected from the keyword list 300, and "news" is acquired as the genre of the program from the electronic program information on the program being watched.

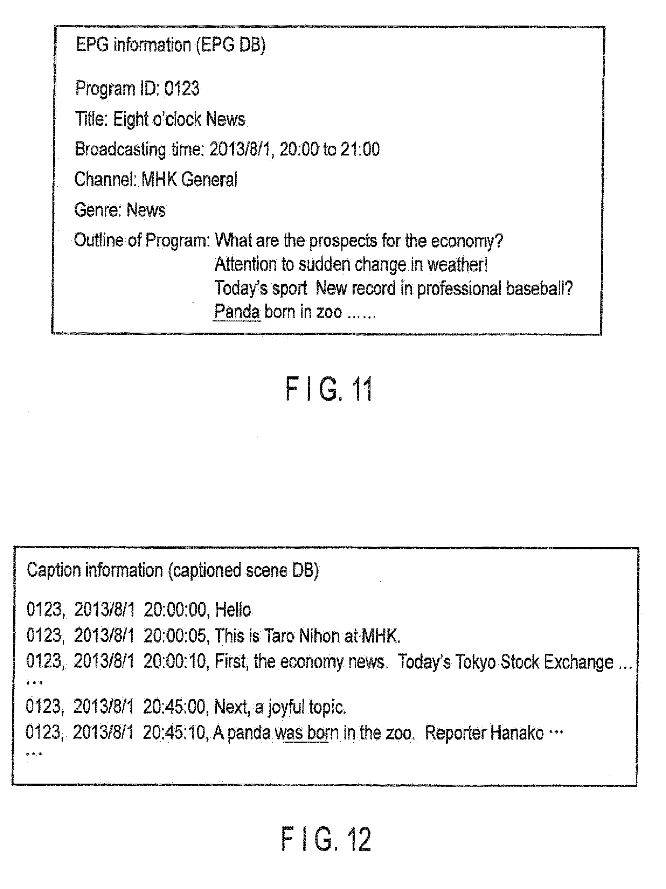

FIG. 11 shows an example of the electronic program information represented by the EPG data whose program ID is "0123". FIG. 12 shows captioned scene data corresponding to a series of scenes included in the recorded program whose program ID is "0123".

With the search using the pattern [1] query, as in the electronic program information shown in FIG. 11, for example, a recorded program corresponding to the electronic program information including "panda" in the character string is found. A search by the pattern [1] query has the advantage that the search is fast since the electronic program information, not caption character strings, is targeted. On the other hand, this search has drawbacks, such as few hits since the character strings included in one item of electronic program information are considerably shorter than the caption character strings in one program, and it being necessary for the user to search for a scene in the recorded program which has been found if the user wishes to watch only the scenes in which the keyword appears.

With the search using the pattern [2] query, as in the scene "2013/8/1 20:45:10" shown in FIG. 12, for example, a scene including "panda" in the caption character strings is found. A search using the pattern [2] query has the advantage that since a specific scene is found, a recorded program can be reproduced from the desired scene and that since the caption character strings are the target of search, the query is more likely to produce hits than the pattern [1] query. On the other hand, this search has drawbacks, such as the search being slow since all of the caption character strings are the target of search, and many scenes being found depending on the keyword, and selecting the desired scene from those scenes is troublesome for the user.

With the search using the pattern [3] query, likewise pattern [2], as in the scene "2013/8/1 20:45:10" shown in FIG. 12, for example, a scene including "panda" in the caption character strings is found. However, in the search using the pattern [3] query, since the genre is limited to "news", scenes of a program whose genre is not "news" are not found. In addition to the advantage described for pattern [2], a search using the pattern [3] query has the advantage that the search can be conducted with high accuracy by narrowing down the search by the genre, and a search load can be reduced since the keyword can be searched for from the caption character strings of a recorded program of a specific genre, for example.

While the pattern [3] query is an example in which only the genre is used as the attribute of the program, the pattern [3] query has a similar advantage even if other attributes, such as the channel and the program code, are used together with or instead of the genre.

In the present embodiment described above, in watching a program which has been recorded by the automatic recording function, a user can search for a recorded program or a scene of the recorded program that suits preferences easily by using the scene search function. The scene search function uses the keyword and the attribute of the program, such as the genre, as the search conditions. Therefore, as compared to a case where only one of them is used as the search condition, the user can find a desired scene accurately.

If a scene is to be searched for in the flow shown in FIG. 4, the user can input the desired search conditions through the search condition screen 200. If a scene is to be searched for in the flow shown in FIG. 8, the user is relieved of a trouble of inputting the keyword character by character by selecting the keyword through the keyword list 300. Further, in this case, since the attribute, which serves as the search condition, is automatically obtained from the electronic program information on the program being watched, the user is relieved of a trouble of inputting the attribute.

In addition, in the present embodiment, the recorded programs to be searched are narrowed down by the attribute, which is the search condition, and a search for a scene including the keyword, which is the search condition, is made in the recorded programs which have been narrowed down. By carrying out the search in this way, the search load can be reduced as stated above.

### (Modifications)

Some of modifications of the above embodiment will be described.

In the present embodiment, the video information recorder, which is an example of the electronic apparatus, has been described. However, the structures of the video information recorder disclosed in the above embodiment can be applied to other electronic apparatuses, such as a personal computer.

In the above embodiment, viewing or recording of a digital broadcast program is described as the subject of processing. However, the subject of processing by the video information recorder may include other types of content, such as an analog broadcast program, a moving image recorded on an optical disk medium, etc., or a moving image downloaded through a network.

In the above embodiment, the flow of processing of creating the keyword list 300 by using the keywords extracted from the captions of the program being watched has been explained. However, the keywords are not limited to the ones extracted from the captions. It is possible to create the keyword list 300 by using the keywords extracted by subjecting the title or the character strings of the outline of the program, for example, included in the electronic program information on the program being watched to morphological analysis.

Further, a graphical user interface (GUI) for specifying the attribute of the program, such as the genre, the program code, or the channel, may be arranged in the keyword list 300. In this case, instead of or together with the attributes acquired from the electronic program information, the attribute specified by the GUI can be adopted as the search condition. In addition, a button for alternately switching between the search condition screen 200 and the keyword list 300 displayed on the display 14 may be arranged on the search condition screen 200, the keyword list 300, the key input module 17, the remote controller 19, or the like.

In the above embodiment, as the "attributes of a program", information, such as the genre of the program, the program code, and the broadcasting station or the channel of the program, indicated by the electronic program information was exemplified. However, the "attributes of a program" are not limited to the above. Other than the above, the "attributes of a program" may include a broadcasting time slot, for example.

In the above embodiment, as an example of captions to be used for extracting keywords to create the keyword list 300 or searching scenes, the processing directed to closed caption has been explained. However, the captions to be used for keyword extraction or scene search may include the so-called open caption integrated with the image. In this case, a function of executing character recognition on the open caption is provided in the video information recorder. Further, the character strings recognized by this character recognition may be added as the subject of processing of blocks B204, B302, B305, etc.

A computer program for controlling a computer such as the video information recorder, etc., to execute functions as the content processor 100, the caption processor 101, the EPG processor 102, the broadcast wave processor 103, the content reproduction processor 104, the condition acquisition processor 105, the scene extraction processor 106, the scene list display controller 107, etc., may be transferred in a state where it is already installed in the computer, or transferred in a state where it is recorded on a non-transitory computer-readable storage medium. Further, the computer program may be downloaded to a computer via a network.

## Claims

1. An electronic apparatus **characterized by**:
a processor (105, 106) configured to acquire a first attribute and a first keyword of content, and to extract a scene including the first keyword in a caption from contents having the first attribute; and
a display controller (107) configured to cause a scene image (400) representing an extracted scene to be displayed on a display (14).

2. The electronic apparatus of Claim 1, **characterized in that** the processor (105, 106) is configured to cause a screen (200) for inputting the first attribute and the first keyword to be displayed on the display (14), and to acquire the first attribute and the first keyword through the screen (200).

3. The electronic apparatus of Claim 1, **characterized in that** the processor (105, 106) is configured to acquire the attribute from electronic program information representing information of a program being displayed on the display (14).

4. The electronic apparatus of Claim 1, **characterized in that** the processor (105, 106) is configured to first extract content having the first attribute from a group of contents, and then extract a scene including the first keyword in a caption from the extracted content.

5. A control method for an electronic apparatus **characterized by** comprising:
acquiring a first attribute and a first keyword of content;
extracting a scene including the first keyword in a caption from contents having the first attribute; and
causing a scene image (400) representing the scene to be displayed on a display (14).

6. The control method of Claim 5, **characterized in that** the acquiring comprises causing a screen (200)
for inputting the first attribute and the first keyword to be displayed on the display (14), and acquiring the first attribute and the first keyword through the screen (200).

7. The control method of Claim 5, **characterized in that** the acquiring comprises acquiring the first attribute from electronic program information representing information of a program being displayed on the display (14).

8. The control method of Claim 5, **characterized in that** the extracting comprises first extracting content having the first attribute from a group of contents, and then extracting a scene including the first keyword in a caption from the extracted content.

9. A computer readable storage medium having stored thereon a computer program which is executable by a computer, **characterized in that** the computer program controls the computer to execute functions of:
acquiring a first attribute and a first keyword of content;
extracting a scene including the first keyword in a caption from contents having the first attribute; and
causing a scene image (400) representing the scene to be displayed on a display (14).

10. The storage medium of Claim 9, **characterized in that** the acquiring comprises causing a screen (200) for inputting the first attribute and the first keyword to be displayed on the display (14), and acquiring the first attribute and the first keyword through the screen (200).

11. The storage medium of Claim 9, **characterized in that** the acquiring comprises acquiring the first attribute from electronic program information representing information of a program being displayed on the display (14).

12. The storage medium of Claim 9, **characterized in that** the extracting comprises first extracting content having the first attribute from a group of contents stored, and then extracting a scene including the first keyword in a caption from the extracted content.

## Amended claims

### Amended claims in accordance with Rule 137(2) EPC.

1. An electronic apparatus comprising:
a processor (105, 106) configured to acquire a first attribute and a first keyword, which are input by a user, for searching for a scene of content, to first extract a content from a group of contents, electronic program information of the extracted content including information matching with the first attribute, and to second extract a scene from scenes of the extracted content, caption of the extracted scene including the first keyword; and
a display controller (107) configured to cause a scene image (400) representing the extracted scene to be displayed on a display (14).

2. The electronic apparatus of Claim 1, wherein the processor (105, 106) is configured to cause a screen (200) for inputting the first attribute and the first keyword to be displayed on the display (14), and to acquire the first attribute and the first keyword through the screen (200).

3. The electronic apparatus of Claim 1, wherein the processor (105, 106) is configured to acquire the first attribute from electronic program information representing information of a program being displayed on the display (14).

4. The electronic apparatus of Claim 1, wherein the processor (105,106) is configured to cause a list (300) of keywords to be displayed on the display (14), the keywords extracted from a caption of content being displayed on the display (14), and to acquire a keyword selected from the list (300) as the first keyword.

5. The electronic apparatus of Claim 4, wherein the processor (105, 106) is configured to use, if the content being displayed on the display (14) is a recorded program, captions of all of the scenes of the recorded program as subject of extraction of keywords to be arranged in the list (300), and to use, if the content being displayed on the display (14) is a program being on the air, captions of the program from the beginning to a scene of which caption storage has been completed as subject of extraction of keywords to be arranged in the list (300).

6. A control method for an electronic apparatus comprising:
acquiring a first attribute and a first keyword, which are input by a user, for searching for a scene of content;
first extracting a content from a group of contents electronic program information of the extracted content including information matching with the first attribute;
second extracting a scene from scenes of the extracted contend, caption of the extracted scene including the first keyword; and
causing a scene image (400) representing the scene to be displayed on a display (14).

7. The control method of Claim 6, wherein the acquiring comprises causing a screen (200) for inputting the first attribute and the first keyword to be displayed on the display (14), and acquiring the first attribute and the first keyword through the screen (200).

8. The control method of Claim 5, wherein the acquiring comprises acquiring the first attribute from electronic program information representing information of a program being displayed on the display (14).

9. The control method of Claim 7, wherein the acquiring includes causing a list (300) of keywords to be displayed on the display (14), the keywords extracted from a caption of content being displayed on the display (14), and acquiring a keyword selected from the list (300) as the first keyword.

10. The control method of Claim 9, wherein, if the content being displayed on the display (14) is a recorded program, captions of all of the scenes of the recorded program are used as subject of extraction of keywords to be arranged in the list (300), and, if the content being displayed on the display (14) is a program being on the air, captions of the program from the beginning to a scene of which caption storage has been completed are used as subject of extraction of keywords to be arranged in the list (300).

11. A computer program comprising program code means adapted to perform the method of any one of claims 6 to 10 when said program is run on a computer.
